# EUROPEAN PATENT APPLICATION

(11) **EP 4 790 538 A1**
(43) Date of publication of application: **12.08.2026**
(21) Application number: 26155975.1
(22) Date of filing: 03.02.2026
(51) Int. Cl.: G06F 3/12

(54) **PRINT SERVER, CONTROL METHOD FOR PRINT SERVER, AND STORAGE MEDIUM**

(30) Priority: 06.02.2025 JP 2025018547
(71) Applicant: Canon Kabushiki Kaisha, Tokyo, 146-8501 (JP)
(72) Inventor: SAKO, Ritsuto, Tokyo (JP)
(74) Representative: WESER & Kollegen Patentanwälte PartmbB

(57) **Abstract**

A print server (130) that provides a cloud print service manages a comprehensive logical printer (1501). The print server registers both a second print server (140) providing a second cloud print service and a physical printer (1501a, 1501b) having a pull printing service license as pull-print-capable printing apparatuses associated with the comprehensive logical printer. A print job submitted to the comprehensive logical printer is stored in association with it (S1521). Upon receiving an instruction to execute the print job from an associated printing apparatus (S1543), the print server determines if the instructing apparatus is a pull-print-capable apparatus. If it is, the stored print job is transmitted to that pull-print-capable apparatus for execution (S1548).

## Description

### TECHNICAL FIELD

The present disclosure relates to a print server, a control method for a print server, and a storage medium.

### BACKGROUND

In a conventional printing service, a user executes printing by directly transmitting a print job from an information processing terminal such as a PC to a printing apparatus. This type of printing method is called direct printing. On the other hand, Japanese Patent Laid-Open No. 2020-67893 and Japanese Patent Laid-Open No. 2023-141093 propose a cloud print service that uses a cloud service provided over the Internet. In the proposed cloud print service, an information processing apparatus that submits print jobs and a printing apparatus that executes printing are registered in a print server that provides the cloud print service, and the print server functions as a virtual printer. A virtual printer is a logical printer that is associated with a print queue and is treated virtually as a single printer. The overview of the printing processing in the cloud print service is as follows. The user issues an instruction to submit a print job from the information processing apparatus to the virtual printer. The print job submitted by the user is stored in a print queue of the virtual printer and is kept there until the user issues a print execution instruction to the printing apparatus. The user logs in to any printing apparatus and issues an instruction to execute printing. The printing apparatus receives print jobs from the print server and executes printing. This type of printing method is called pull printing.

Additionally, Japanese Patent Laid-Open No. 2018-156392 proposes a server that, when pull printing is to be performed, determines whether or not printing can be performed based on a processing capacity of the printer performing the pull printing and the attributes of accumulated print files.

### SUMMARY

In the case of pull printing in the cloud print service, a print instruction is issued without designating a printing apparatus, and when printing is executed, a printing apparatus specifies a print job and executes printing. However, when print servers that provide cloud print services are operated in coordination with one another, the printing apparatus of one cloud print service cannot perform pull printing for a print job submitted to another cloud print service.

In addition, printing apparatus vendors provide their own pull printing services using a licensing scheme. The proposed pull printing server allows pull printing when a printing apparatus is registered, regardless of the pull printing service license.

The present disclosure realizes pull printing in a cloud print system in which a plurality of cloud print services operate in coordination with each other.

The present disclosure also provides a technique that enables pull printing by a printing apparatus that has a license for a pull printing service.

The present disclosure in its first aspect provides a print server as specified in claims 1. Optional features are specified in claims 2 to 5.

The present disclosure in its second aspect provides a control method for a print server as specified in claim 6.

The present disclosure in its third aspect provides a non-transitory computer-readable storage medium as specified in claim 7.

Features of the present disclosure will become apparent from the following description of embodiments with reference to the attached drawings. The following description of embodiments is described by way of example.

### BRIEF DESCRIPTION OF THE DRAWINGS

The accompanying drawings, which are incorporated in and constitute a part of the specification, illustrate embodiments of the present disclosure, and together with the description, serve to explain the principles of the embodiments.
FIG. 1 is a schematic diagram illustrating an example of a configuration of a printing system according to an embodiment.
FIG. 2 is a block diagram illustrating an example of a hardware configuration of a computer according to an embodiment.
FIG. 3 is a block diagram illustrating an example of a functional configuration of a print server according to an embodiment.
FIG. 4 is a block diagram illustrating an example of a functional configuration of an information processing apparatus according to an embodiment.
FIG. 5 is a block diagram illustrating an example of a hardware configuration of a printing apparatus according to an embodiment.
FIG. 6 is a schematic diagram illustrating an example of a configuration of an operation unit of a printing apparatus according to an embodiment.
FIG. 7 is a block diagram illustrating an example of a functional configuration of a printing apparatus according to an embodiment.
FIG. 8 is a sequence diagram illustrating overall processing of cloud printing according to an embodiment.
FIG. 9 is a schematic diagram illustrating a comprehensive logical printer and an individual logical printer according to an embodiment.
FIGS. 10A and 10B are diagrams illustrating examples of printer information and job information according to an embodiment.
FIG. 11 is a flowchart illustrating an example of a registration operation of a printing apparatus according to an embodiment.
FIG. 12 is a flowchart illustrating an example of an operation for transmitting an instruction to move a print job according to an embodiment.
FIG. 13 is a diagram illustrating processing for performing pull printing according to one embodiment.
FIGS. 14A and 14B are diagrams illustrating selection of a print job according to an embodiment.
FIG. 15 is a diagram illustrating coordinated operation performed by a plurality of cloud print services according to an embodiment.
FIG. 16 is a diagram for describing a printer attribute according to an embodiment.
FIG. 17 is a diagram illustrating registration of a printer attribute according to an embodiment.
FIGS. 18A and 18B are diagrams illustrating an example of printer information according to an embodiment.
FIG. 19 is a diagram illustrating correspondence of user accounts in a cloud print service according to an embodiment.
FIG. 20 is a diagram illustrating a list of print jobs according to an embodiment.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

### First Embodiment

### Example of Configuration of Printing System

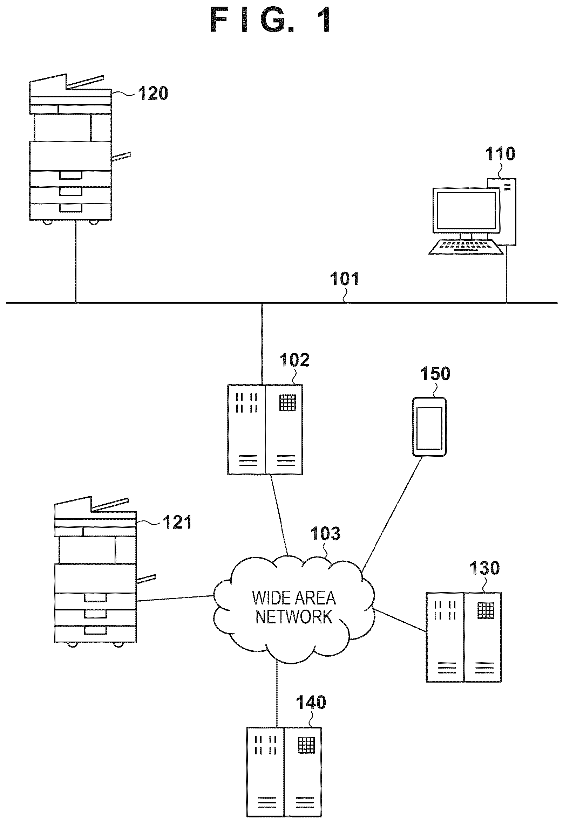

An example of a configuration of a printing system according to a first embodiment will be described with reference to FIG. 1. The printing system includes, for example, an information processing apparatus 110, printing apparatuses 120 and 121, a first print server 130, a second print server 140, and a portable communication apparatus 150. The number of constituent elements of the printing system is not limited to the example shown in FIG. 1. The printing system may also include constituent elements not shown in FIG. 1.

The information processing apparatus 110 and the printing apparatus 120 are connected to the same local area network (LAN) 101. The LAN 101 may be a wired LAN, a wireless LAN, or a combination of both. The LAN 101 is connected to a wide area network 103 (e.g., the Internet) through a firewall 102. The printing apparatus 121, the first print server 130, and the second print server 140 are also connected to the wide area network 103. The information processing apparatus 110 and the printing apparatus 120 can communicate with each other within the LAN 101 (i.e., without passing through the wide area network 103). In addition, the information processing apparatus 110 and the printing apparatus 120 can each communicate with the first print server 130 and the second print server 140 via the LAN 101, the firewall 102 and the wide area network 103. The printing apparatus 121 may be connected to the wide area network 103 via a LAN or a cellular network (e.g., a network conforming to the fourth generation communication standard (4G) or the fifth generation communication standard (5G)). The information processing apparatus 110 and the portable communication apparatus 150 may also be connected to the wide area network 103 via a cellular network. The portable communication apparatus 150 may also be connectable to the LAN 101.

The printing apparatuses 120 and 121 have a printing function for performing printing based on a print job. The printing apparatuses 120 and 121 may include at least one of a scanner function and a fax function in addition to the printing function. A printing apparatus having a plurality of functions in this way may also be called a multifunction printer (MFP). Alternatively, the printing apparatuses 120 and 121 may be dedicated machines having only a printing function (SFP: Single Function Peripheral). The printing may be printing onto a sheet-like recording medium such as paper, or may be forming a three-dimensional object (so-called three-dimensional printing).

The first print server 130 provides a print service that transmits a print job to any printing apparatus (e.g., the printing apparatus 120) according to the print job generated by the information processing apparatus 110. For example, the first print server 130 provides a logical printer to the information processing apparatus 110 and accepts print jobs for the logical printer. A logical printer is a virtual printing apparatus (e.g., a printer object) provided by the first print server 130. A logical printer may also be called a cloud printer. The information processing apparatus 110 can generate print queues for the logical printer as well as the printing apparatuses 120 and 121. In contrast to a logical printer, a physical printing apparatus such as the printing apparatuses 120 and 121 may also be called a physical printer. A physical printer may also be called a local printer if it is connected to the same LAN as the information processing apparatus that submits the print job. In the following description, logical printers and physical printers will be collectively referred to simply as printers.

The first print server 130 may be a server in an on-premises environment connected to the wide area network 103, or may be a server in a cloud computing environment (hereinafter simply referred to as a cloud). The print service provided by the first print server 130 in the cloud may be called a cloud print service (hereinafter referred to as a CPS). An example of a CPS is Universal Print (registered trademark) provided by Microsoft (registered trademark). In the following description, a case is described in which the first print server 130 is located in the cloud. However, the following description also applies to a case where the first print server 130 is located in an on-premises environment.

The second print server 140 has a similar configuration to the first print server 130. The second print server 140 may provide a different CPS than the first print server 130. For example, the CPS may be uniFLOW Online (registered trademark) provided by Canon Inc., or another CPS. In the following description, a case is described in which the second print server 140 is located in the cloud. However, the following description also similarly applies to the case where the second print server 140 is located in an on-premises environment.

The information processing apparatus 110 provides a printing function to a user of the information processing apparatus 110. The information processing apparatus 110 may designate a physical printer (e.g., the printing apparatus 120) connected to the same LAN 101 as the output destination, or may designate a logical printer provided by the first print server 130 as the output destination. When a logical printer is designated as the output destination, a physical printer (e.g., the printing apparatus 120) associated with the logical printer performs printing. The information processing apparatus 110 that uses the CPS may also be called a client or a client terminal. Printing performed by submitting a print job to a logical printer may also be called cloud printing. Printing by cloud printing may be executed by the printing apparatus 120 connected to the same LAN 101 as the information processing apparatus 110, or may be performed by the printing apparatus 121 not connected to the LAN 101. Printing performed by submitting a print job directly to a physical printer (i.e., within a LAN) can also be called local printing.

### Example of Hardware Configuration of Computer

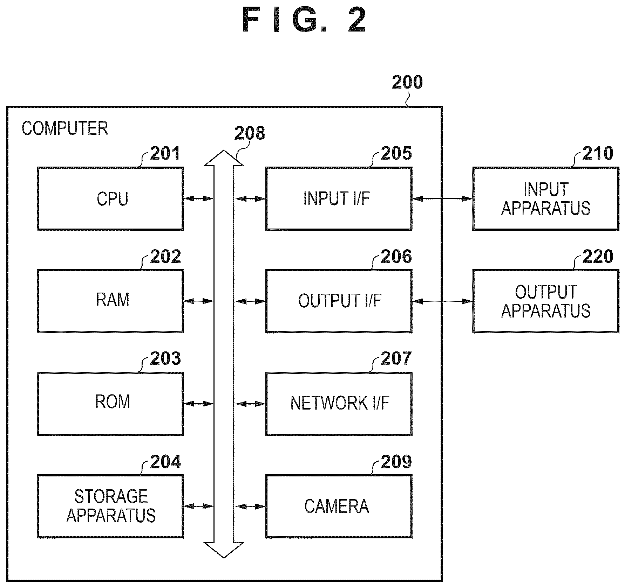

An example of a hardware configuration of a computer 200 according to this embodiment will be described with reference to FIG. 2. The computer 200 may be used as the information processing apparatus 110, the first print server 130 and the second print server 140, or the portable communication apparatus 150. The computer 200 may have the constituent elements shown in FIG. 2.

A central processing unit (CPU) 201 is a general-purpose processing circuit that performs overall control of the operation of the computer 200. A random access memory (RAM) 202 is a volatile memory circuit, and is used as a temporary storage region such as a work area for processing by the CPU 201. A read-only memory (ROM) 203 is a non-volatile memory circuit that stores a program and data used in the processing of the CPU 201. A storage apparatus 204 is a non-volatile storage device that stores programs and data used in the processing of the CPU 201. The storage apparatus 204 may be, for example, a hard disk drive (HDD) or a solid state drive (SSD). The storage apparatus 204 may also be referred to as a secondary storage apparatus. The operation of the computer 200 may be realized by the CPU 201 executing a program read out from the storage apparatus 204 to the RAM 202.

An input interface (I/F) 205 is an I/F for exchanging signals with an input apparatus 210. The input apparatus 210 is an apparatus that acquires input from the user of the computer 200. The input apparatus 210 may be, for example, a keyboard, a touch panel, a microphone, a mouse, or any combination thereof. An output I/F 206 is an I/F for exchanging signals with an output apparatus 220. The output apparatus 220 is an apparatus that provides information to the user of the computer 200. The output apparatus 220 may be, for example, a display, a speaker, or any combination thereof. A network I/F 207 is an I/F for communicating with an apparatus external to the computer 200. The CPU 201, the RAM 202, the ROM 203, the storage apparatus 204, the input I/F 205, the output I/F 206, and the network I/F 207 are each connected to a system bus 208. In the example of FIG. 2, the input apparatus 210 and the output apparatus 220 are shown as apparatuses separate from the computer 200. Alternatively, the computer 200 may include the input apparatus 210 and the output apparatus 220. For example, when the computer 200 is used as the portable communication apparatus 150, the portable communication apparatus 150 may include the input apparatus 210 and the output apparatus 220. Furthermore, the computer 200 (in particular, the portable communication apparatus 150) may include a camera 209.

### Example of Functional Configuration of Print Servers

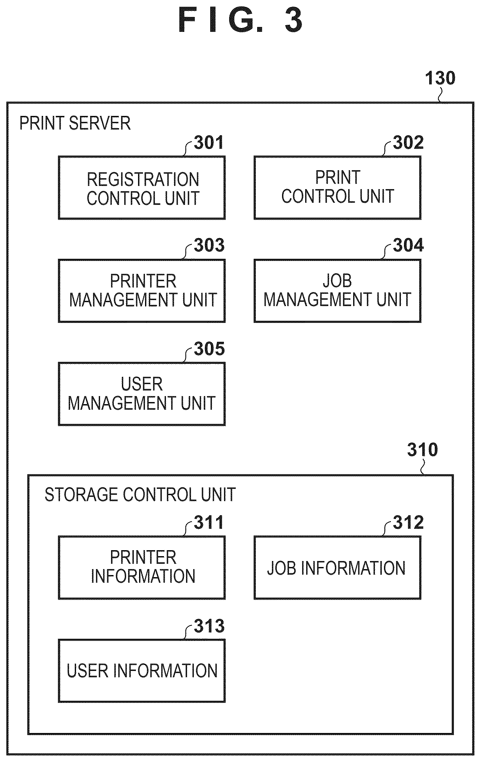

An example of a functional configuration of the first print server 130 and the second print server 140 will be described with reference to FIG. 3. Since the functional configurations of the first print server 130 and the second print server 140 are basically the same, an example of the functional configuration of the first print server 130 will be described below. The second print server 140 may have different functions than the first print server 130. The first print server 130 may have the functional units shown in FIG. 3. The first print server 130 may also have functional units not shown in FIG. 3. Each functional unit in FIG. 3 may be realized by the CPU 201 executing a program read out to the RAM 202. Alternatively, some or all of the functional units of FIG. 3 may be realized by a dedicated processing circuit such as an application specific integrated circuit (ASIC).

A registration control unit 301 performs processing for registering a logical printer. For example, in response to a registration start request from a printing apparatus, the registration control unit 301 generates a logical printer associated with a physical printer and registers the generated logical printer in printer information 311. The logical printer registered in the printer information 311 is recognized as a printer by the information processing apparatus 110. The physical printer associated with the logical printer may be a physical printer that is to perform printing according to a print job submitted to the logical printer. A logical printer may be associated with only one physical printer. A physical printer may be associated with only one logical printer, or with a plurality of logical printers.

A print control unit 302 performs processing related to print jobs for a logical printer. For example, the print control unit 302 receives a print job for a logical printer from the information processing apparatus 110, and based on this, transmits the print job to a physical printer associated with the logical printer. The print control unit 302 may also control events related to print jobs. An event related to a print job may include, for example, reception of a print job. In response to receiving an event request from a physical printer, the print control unit 302 may respond with an event related to that physical printer.

A printer management unit 303 manages information related to the logical printer registered in the first print server 130 as the printer information 311. The printer information 311 includes capability information of the physical printer associated with the logical printer, a cloud printer ID uniquely assigned to the logical printer, information on a print queue in which the print job is spooled, and the like. The cloud printer ID may be the UUID or the like of the physical printer.

A job management unit 304 manages information related to the print job received from the information processing apparatus 110 as job information 312. The job information 312 includes information and status of the print job, print data included in the print job, and the like.

A user management unit 305 manages user account information for the cloud print service as user information 313. The user information 313 includes an account of the user of the cloud print service.

A storage control unit 310 stores information in the RAM 202 or the storage apparatus 204, or reads out information from the RAM 202 or the storage apparatus 204, in accordance with instructions from other functional units. According to this embodiment, the storage control unit 310 stores the printer information 311, the job information 312, and the user information 313.

### Example of Functional Configuration of Information Processing Apparatus

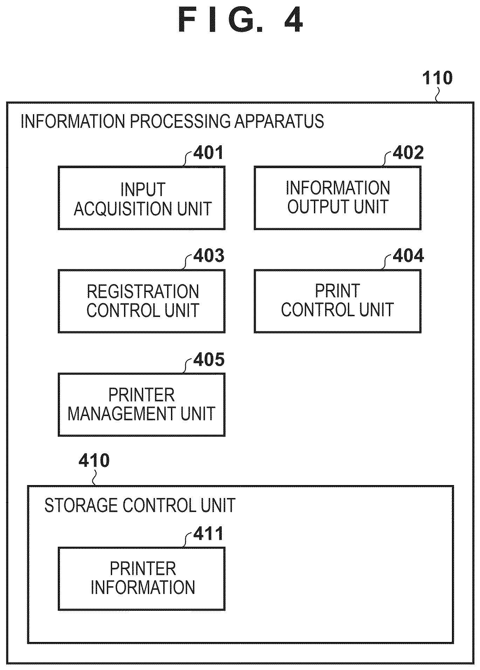

An example of a functional configuration of the information processing apparatus 110 will be described with reference to FIG. 4. The information processing apparatus 110 may have the functional units shown in FIG. 4. The information processing apparatus 110 may also have functional units not shown in FIG. 4. Each functional unit in FIG. 4 may be realized by the CPU 201 executing a program read out to the RAM 202. Alternatively, some or all of the functional units in FIG. 4 may be implemented by a dedicated processing circuit such as an ASIC.

An input acquisition unit 401 acquires input from the user of the information processing apparatus 110 using the input I/F 205. An information output unit 402 outputs information to the user of the information processing apparatus 110 using the output I/F 206.

A registration control unit 403 performs processing for registering a logical printer in the first print server 130 or the second print server 140. A print control unit 404 performs processing related to printing by the printer. For example, the print control unit 404 may transmit a print job to a logical printer registered in the first print server 130 or the second print server 140 in accordance with a print instruction from the user of the information processing apparatus 110. The print control unit 404 may transmit a print job directly to a physical printer (that is, within the same LAN) in accordance with a print instruction from the user of the information processing apparatus 110.

A printer management unit 405 manages, as printer information 411, information related to a printer to which the information processing apparatus 110 can submit a print job. The printer information 411 includes capability information of the printer and the like.

A storage control unit 410 stores information in the RAM 202 or the storage apparatus 204, or reads out information from the RAM 202 or the storage apparatus 204, in accordance with an instruction from another functional unit. According to this embodiment, the storage control unit 410 stores the printer information 411.

### Example of Hardware Configuration of Printing Apparatus

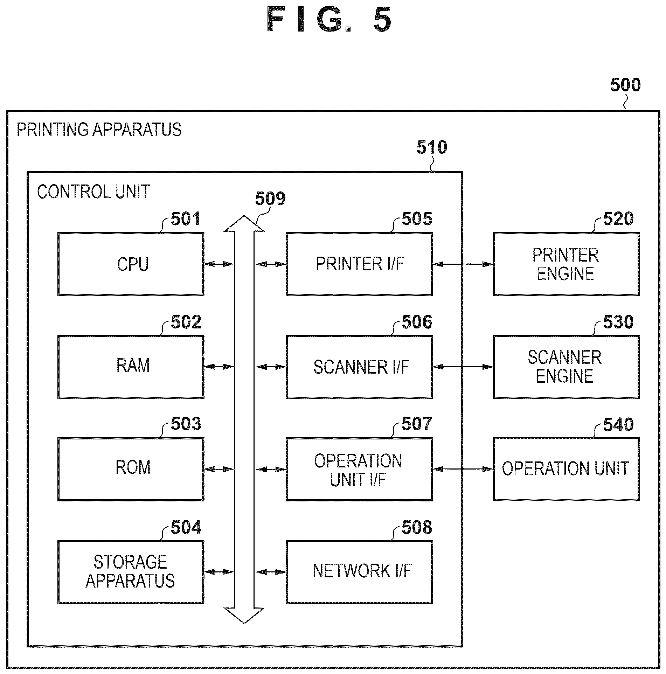

An example of a hardware configuration of a printing apparatus 500 according to this embodiment will be described with reference to FIG. 5. The printing apparatus 500 may be used as the printing apparatus 120 or the printing apparatus 121. The printing apparatus 500 may have the constituent elements shown in FIG. 5. Since the printing apparatus 500 is a physical printing apparatus, it may also be called a physical printer.

A CPU 501 is a general-purpose processing circuit that performs overall control of operation of the printing apparatus 500. A RAM 502 is a volatile memory circuit and is used as a temporary storage region such as a work area for processing by the CPU 501. A ROM 503 is a non-volatile memory circuit that stores programs and data used in the processing of the CPU 501. A storage apparatus 504 is a non-volatile storage apparatus, and stores programs and data (e.g., print jobs, image data, and setting information) used in the processing of the CPU 501. The storage apparatus 504 may be, for example, an HDD or an SSD. The storage apparatus 504 may also be referred to as a secondary storage apparatus. The operation of the printing apparatus 500 may be realized by the CPU 501 executing a program read out from the storage apparatus 504 to the RAM 502.

A printer I/F 505 is an I/F for exchanging signals with a printer engine 520. The printer engine 520 performs printing based on signals (e.g., image signals and print commands) supplied from a control unit 510 via the printer I/F 505. The printing may be electrophotographic printing in which toner is transferred to paper and fixed there, inkjet printing in which ink is ejected onto paper, or three-dimensional printing.

A scanner I/F 506 is an I/F for exchanging signals with a scanner engine 530. The scanner engine 530 supplies a signal (e.g., an image signal) obtained by reading a document to the control unit 510 via the scanner I/F 506. The CPU 501 may process the image signal supplied from the scanner engine 530 and supply the resulting print image signal to the printer engine 520. The CPU 501 may also generate image data based on an image signal supplied from the scanner engine 530 and transmit this to an external apparatus.

An operation unit I/F 507 is an I/F for exchanging signals with an operation unit 540. The operation unit 540 is a device that acquires input from a user of the printing apparatus 500 and provides information to the user of the printing apparatus 500. The operation unit 540 may be constituted by, for example, a display panel (e.g., a liquid crystal display), a speaker, a touch panel, a keyboard, buttons, a touch screen, or any combination of these.

A network I/F 508 is an I/F for communicating with an apparatus external to the printing apparatus 500. The control unit 510 is constituted by the CPU 501, the RAM 502, the ROM 503, the storage apparatus 504, the printer I/F 505, the scanner I/F 506, the operation unit I/F 507, and the network I/F 508. Each constituent element included in the control unit 510 is connected to a system bus 509.

### Example of Configuration of Operation Unit of Printing Apparatus

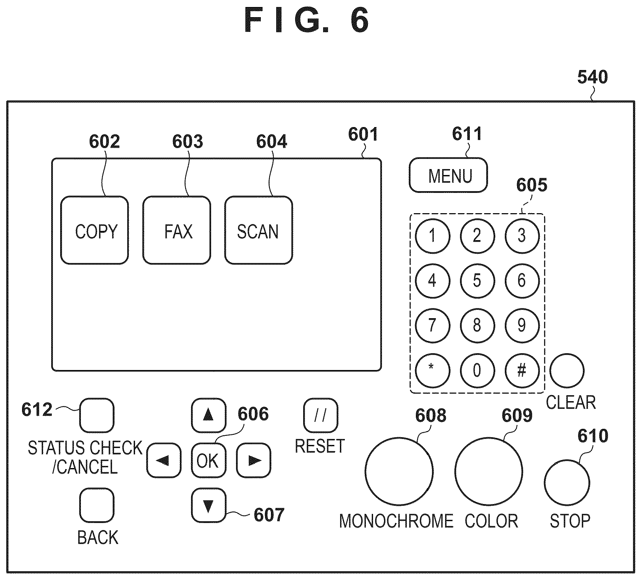

An example of a configuration of the operation unit 540 of the printing apparatus 500 will be described with reference to FIG. 6. In the example of FIG. 6, the operation unit 540 is configured as an operation panel formed in the shape of a panel. The operation unit 540 may have the constituent elements shown in FIG. 6. The operation unit 540 may also have constituent elements not shown in FIG. 6.

The display panel 601 is a touch screen obtained by integrally forming a touch panel for obtaining input from the user and a display (e.g., a liquid crystal display) for displaying information to the user. In the example of FIG. 6, a display panel 601 displays buttons 602 to 604. The button 602 is a software button for acquiring an instruction from the user to transition to a copy mode. In response to the user touching the button 602, the printing apparatus 500 displays a copy operation screen on the display panel 601. The button 603 is a software button for acquiring an instruction from the user to transition to a FAX mode. In response to the user touching the button 603, the printing apparatus 500 displays a FAX operation screen on the display panel 601. The button 604 is a software button for acquiring an instruction from the user to transition to a scanner mode. In response to the user touching the button 604, the printing apparatus 500 displays a scanner operation screen on the display panel 601. In addition, the display panel 601 may display a dialogue for communicating with the user and a job list for cloud print.

A numeric keypad 605 is a set of physical buttons for acquiring input of numbers and the like from the user. A button 606 is a physical button for acquiring, from the user, an instruction or the like to determine display content of the display panel 601. Direction keys 607 are physical buttons for acquiring, from the user, an instruction or the like to select an item from a menu displayed on the display panel 601. A button 608 is a physical button for acquiring a monochrome copy instruction from the user. A button 609 is a physical button for acquiring a color copy instruction from the user. A button 610 is a physical button for acquiring an instruction to stop processing from the user. A button 611 is a physical button for acquiring, from the user, an instruction to display a menu screen for setting the printing apparatus 500 and the like. A button 612 is a physical button for acquiring, from the user, an instruction to display the status of the printing apparatus 500, such as a list of print jobs received by the printing apparatus 500.

### Example of Functional Configuration of Printing Apparatus

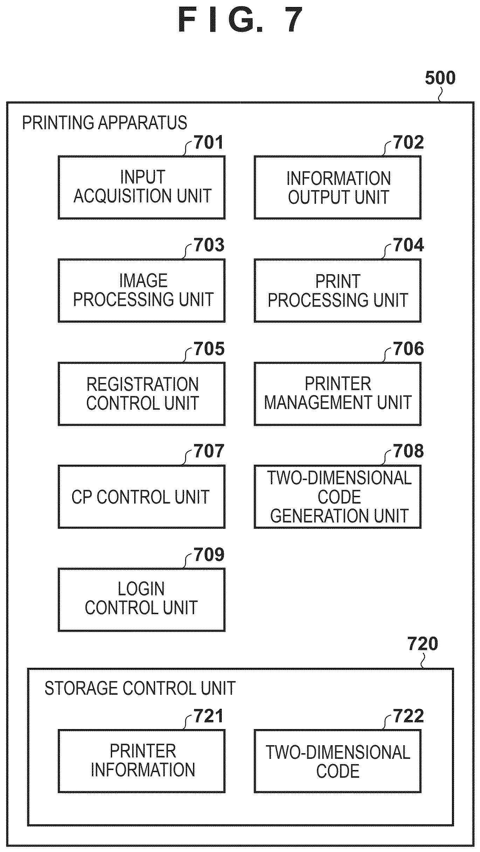

An example of a functional configuration of the printing apparatus 500 will be described with reference to FIG. 7. The printing apparatus 500 may have the functional units shown in FIG. 7. The printing apparatus 500 may also have other functional units not shown in FIG. 7. Each functional unit in FIG. 7 may be realized by the CPU 501 executing a program read out to the RAM 502. Alternatively, some or all of the functional units in FIG. 7 may be implemented by a dedicated processing circuit such as an ASIC.

An input acquisition unit 701 acquires input from the user of the printing apparatus 500 using the operation unit I/F 507. An information output unit 702 outputs information to the user of the printing apparatus 500 using the operation unit I/F 507. An image processing unit 703 renders the print job into image data for printing. A print processing unit 704 prints the image data rendered by the image processing unit 703.

A registration control unit 705 performs processing for registering the logical printer associated with the printing apparatus 500 in the first print server 130. A printer management unit 706 manages information related to the printing apparatus 500 as printer information 721. The printer information 721 may include, for example, the status of the printing apparatus 500, the capability of the printing apparatus 500, and a cloud printer ID uniquely assigned by the first print server 130 to the logical printer associated with the printing apparatus 500. The printer information 721 may also include a local printer ID for the information processing apparatus 110 to identify a printing apparatus within the same LAN 101. The printer information 721 may also include various license keys. The license keys may include a pull printing license.

A cloud print (CP) control unit 707 performs processing related to cloud print. For example, the CP control unit 707 may transfer print data received from the first print server 130 or the second print server 140 to the image processing unit 703. The CP control unit 707 may also transmit an event request to the first print server 130 or the second print server 140.

A two-dimensional code generation unit 708 generates a two-dimensional code that encodes information (e.g., a cloud printer ID). The two-dimensional code may be a QR code (registered trademark) or another two-dimensional code. A login control unit 709 controls login processing to the printing apparatus 500 by the user of the printing apparatus 500.

A storage control unit 720 stores information in the RAM 502 or the storage apparatus 504, or reads out information from the RAM 502 or the storage apparatus 504, in accordance with an instruction from another functional unit. According to this embodiment, the storage control unit 720 stores the printer information 721 and a two-dimensional code 722. The two-dimensional code 722 is a two-dimensional code that encodes the cloud printer ID assigned to the logical printer associated with the printing apparatus 500.

### Overall Processing Sequence for Cloud Print

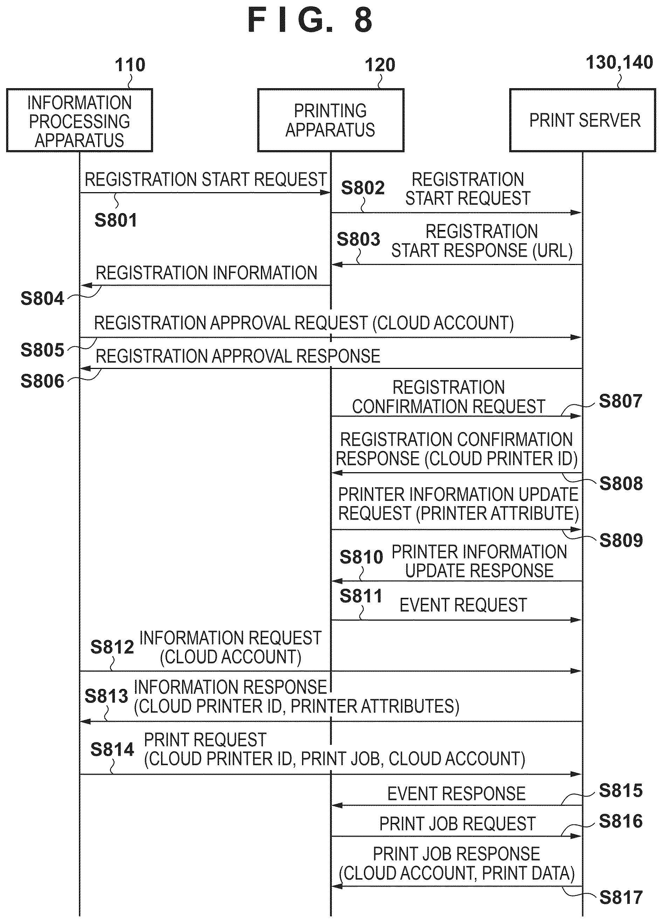

The overall processing sequence for performing cloud print will be described with reference to FIG. 8. The example in FIG. 8 deals with a case where the information processing apparatus 110 registers the printing apparatus 120 in the first print server 130 or the second print server 140 and submits a print job to the logical printer associated with the printing apparatus 120. In the following description, a case will be described in which the information processing apparatus 110 registers the printing apparatus 120 in the first print server 130 and submits a print job to the logical printer associated with the printing apparatus 120. The same applies to the case where the printing apparatus 120 is registered in the second print server 140.

Registering the printing apparatus 120 in the first print server 130 may mean registering the logical printer associated with the printing apparatus 120 in the first print server 130. In the following example, it is assumed that the printing apparatus 120 supports a web user interface (UI) function for operating the printing apparatus 120 from the information processing apparatus 110. Also, it is assumed that the information processing apparatus 110 supports a web UI client function. Mutual communication between the information processing apparatus 110, the printing apparatus 120, and the first print server 130 may be performed using the Internet Printing Protocol (IPP).

In step S801, the registration control unit 403 of the information processing apparatus 110 transmits a registration start request to the printing apparatus 120 in accordance with an instruction from the user of the information processing apparatus 110. The registration start request may be a request to start processing for registering the printing apparatus 120 in the first print server 130. The registration start request may be transmitted using the web UI client function of the information processing apparatus 110.

In step S802, in response to receiving the registration start request from the information processing apparatus 110, the registration control unit 705 of the printing apparatus 120 transmits a registration start request to the first print server 130. The registration start request may be a request to start processing for registering the printing apparatus 120 in the first print server 130.

In step S803, in response to receiving the registration start request from the printing apparatus 120, the registration control unit 301 of the first print server 130 transmits a registration start response to the printing apparatus 120. The registration start response includes a Uniform Resource Locator (URL) of a web page for the user of the information processing apparatus 110 to input information for registering the printing apparatus 120 in the first print server 130.

In step S804, the registration control unit 705 of the printing apparatus 120 transmits registration information to the information processing apparatus 110 in response to receiving the registration start response from the first print server 130. The registration information includes the URL included in the registration start response. In response to receiving the registration information from the printing apparatus 120, the information output unit 402 of the information processing apparatus 110 displays a web page to the user.

In step S805, the registration control unit 403 of the information processing apparatus 110 transmits a registration approval request to the first print server 130 in response to the user of the information processing apparatus 110 accessing the URL and inputting information required for registration. The registration approval request includes the cloud account of the user of the information processing apparatus 110. A cloud account is an account that allows a user to use a tenant of the cloud that includes the first print server 130.

In step S806, the registration control unit 301 of the first print server 130 confirms whether or not the cloud account included in the registration approval request belongs to a user who has the authority to register the printing apparatus 120 in the first print server 130. If the user has the authority, the registration control unit 301 of the first print server 130 transmits a registration approval response to the information processing apparatus 110. The registration approval response may be a message performing notification of the result of confirming that the user of the information processing apparatus 110 is a user who has the authority to register the printing apparatus 120.

In step S807, in response to receiving the registration start response from the first print server 130, the printer management unit 706 of the printing apparatus 120 transmits a registration confirmation request to the first print server 130. The registration confirmation request is a request related to registering the printing apparatus 120 in the first print server 130, and specifically may be a request to register the printing apparatus 120 in the first print server 130.

In step S808, in response to receiving the registration confirmation request from the printing apparatus 120, the printer management unit 303 of the first print server 130 generates a new logical printer, associates the logical printer with the printing apparatus 120, and adds the logical printer to the printer information 311. As a result, the printing apparatus 120 is registered in the first print server 130, and the information processing apparatus 110 becomes capable of cloud printing using the logical printer. In addition, the printer management unit 303 of the first print server 130 assigns a unique cloud printer ID to the created logical printer, associates this cloud printer ID with the logical printer, and adds it to the printer information 311. Thereafter, the registration control unit 301 of the first print server 130 transmits a registration confirmation response to the printing apparatus 120. The registration confirmation response includes the cloud printer ID of the printing apparatus 120. In addition, the two-dimensional code generation unit 708 of the first print server 130 creates a two-dimensional code 722 encoding the received cloud printer ID. The storage control unit 720 of the first print server 130 stores this two-dimensional code 722.

In response to receiving the registration confirmation response (step S808) from the first print server 130, the registration control unit 705 of the printing apparatus 120 transmits a cloud printer information update request S809 to the first print server 130. The information update request S809 includes the printer attributes of the printing apparatus 120. Here, the printer attributes include the printer name, manufacturer, model name, and the like. Upon receiving the information update request S809 from the printing apparatus 120, the first print server 130 transmits a cloud printer information update response S810 to the printing apparatus 120.

The processing of step S811 and onward is processing related to the execution of the print job. In step S811, the CP control unit 707 of the printing apparatus 120 transmits an event request to the first print server 130. The event request may be a request to notify the printing apparatus 120 when an event related to the printing apparatus 120 occurs. The event request may relate to the event of a print job being submitted to a logical printer associated with the printing apparatus 120.

In step S812, the printer management unit 405 of the information processing apparatus 110 transmits an information request to the first print server 130 in accordance with an instruction from the user of the information processing apparatus 110. The information request may be a request for information related to logical printers available to the user of the information processing apparatus 110. The information request includes the cloud account of the user of the information processing apparatus 110.

In step S813, the printer management unit 303 of the first print server 130 transmits an information response to the information processing apparatus 110 in response to receiving the information request from the information processing apparatus 110. The information response includes a cloud printer ID and printer attributes for each of the one or more logical printers available to the user of the information processing apparatus 110. The printer management unit 405 of the information processing apparatus 110 updates the printer information 411 based on the information response.

In step S814, the printer management unit 405 of the information processing apparatus 110 transmits a print request to the first print server 130 in accordance with an instruction from the user of the information processing apparatus 110. The print request includes the cloud printer ID, the print job, and the cloud account of the user of the information processing apparatus 110. A print job may include print data and a print setting. The print request may be a request to print the print data included in the print request to a logical printer having the cloud printer ID included in the print request.

In step S815, in response to receiving the print request from the information processing apparatus 110, the print control unit 302 of the first print server 130 transmits an event response to the printing apparatus 120 associated with the logical printer. The event response is a response to the event request received in step S811. The event response is a response for notifying that an event of the type specified in the event request has occurred.

In step S816, in response to receiving the event response from the first print server 130, the CP control unit 707 of the printing apparatus 120 transmits a print job request to the first print server 130. The print job request may be a request for a print job to be performed by the printing apparatus 120.

In step S817, in response to receiving the print job request from the printing apparatus 120, the print control unit 302 of the first print server 130 transmits a print job response to the printing apparatus 120. The print job response includes the cloud account and the print job. Thereafter, in response to receiving the print job response from the first print server 130, the printing apparatus 120 performs printing based on the print job. The print job response received by the printing apparatus 120 from the first print server 130 may be an IPP Fetch-Job Response.

In the description of FIG. 8, the registration of the printing apparatus 120 in steps S801 to S806 and the cloud printing in steps S812 to S817 may be performed by the same user or by different users.

### Comprehensive Logical Printer and Individual Logical Printers

The following describes the comprehensive logical printer and individual logical printers provided by the print server. Since the second print server 140 is similar to the first print server 130, the comprehensive logical printer and the individual logical printers provided by the first print server 130 will be described below. In this embodiment, the first print server 130 may be capable of providing a comprehensive logical printer and individual logical printers. As mentioned above, a logical printer is a virtual printing apparatus (e.g., a printer object) provided by the first print server 130. An individual logical printer is a logical printer associated with a specific physical printer. A print job submitted to an individual logical printer can be printed by the physical printer associated with that individual logical printer. A comprehensive logical printer is a logical printer that is not directly associated with a specific physical printer, but is associated with one or more individual logical printers. Typically, a comprehensive logical printer is associated with a plurality of individual logical printers. A print job submitted to a comprehensive logical printer is moved to one of the individual logical printers associated with the comprehensive logical printer in accordance with an instruction from the user. In other words, a print job submitted to a comprehensive logical printer is submitted to any one of the individual logical printers. The print job can then be printed by the physical printer associated with this individual logical printer. A comprehensive logical printer is also called a virtual printer because it is not directly associated with a physical printer.

The registration control unit 301 of the first print server 130 may be capable of registering a comprehensive logical printer and an individual logical printer in the first print server 130, for example, in accordance with an instruction from a user of the printing apparatus 500 or an administrator of the printing system. For example, as described above, in step S808 of FIG. 8, the registration control unit 301 of the first print server 130 registers the logical printer. This logical printer is associated with a specific physical printer and is therefore registered as an individual logical printer. In addition, if a comprehensive logical printer is already registered in the cloud tenant to which the user who registered the physical printer belongs, the registration control unit 301 of the first print server 130 may associate the newly registered individual logical printer with the comprehensive logical printer.

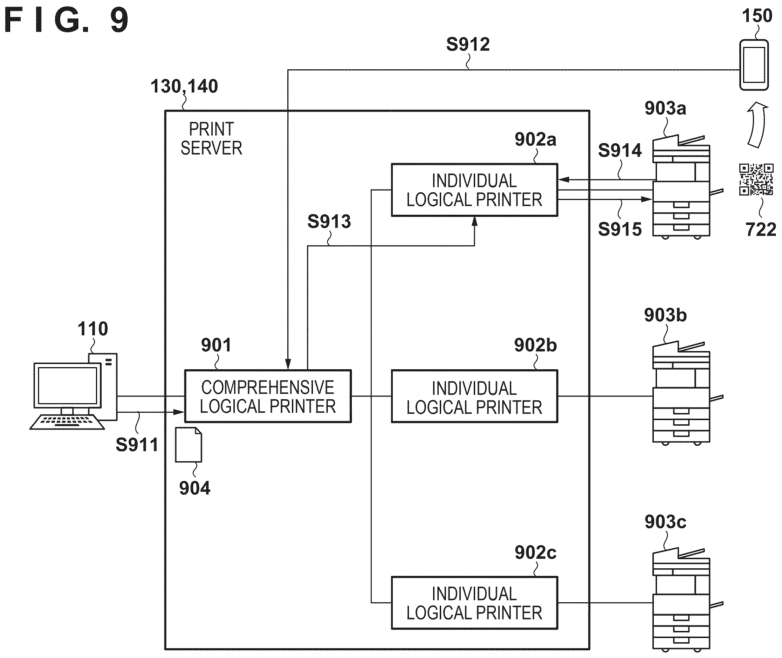

With reference to FIG. 9, an example of a comprehensive logical printer and an individual logical printer provided by the first print server 130 or the second print server 140 will be described. Since the first print server 130 and the second print server 140 are similar, only the first print server 130 will be described. One comprehensive logical printer 901 and three individual logical printers 902a to 902c are registered in the first print server 130, and the first print server 130 provides these four logical printers. The three individual logical printers 902a to 902c are all associated with the comprehensive logical printer 901. In addition, the three individual logical printers 902a to 902c are individually associated with three physical printers 903a to 903c, respectively. For example, the individual logical printer 902a is associated with only the physical printer 903a out of the three physical printers 903a to 903c. The physical printers 903a to 903c may have a similar configuration to the printing apparatus 500. The physical printers 903a to 903c may be connected to the same LAN 101 as the information processing apparatus 110, like the printing apparatus 120, or may not be connected to the same LAN 101 as the information processing apparatus 110, like the printing apparatus 121.

The processing flow of printing performed by submitting a print job to the comprehensive logical printer 901 will be described with reference to FIG. 9. In step S911, the print control unit 404 of the information processing apparatus 110 submits a print job 904 to the comprehensive logical printer 901. At this stage, the user of the information processing apparatus 110 does not need to designate which physical printer to use for printing.

In step S912, the user who submitted the print job 904 or another user instructs the first print server 130 to move the print job 904 submitted to the comprehensive logical printer 901 to the individual logical printer 902a to perform printing using the physical printer 903a. This instruction may be issued using the portable communication apparatus 150 or the physical printer 903a. This instruction includes the identification information (job ID) of the job to be moved and the cloud printer ID of the individual logical printer 902a that is the movement destination.

In step S913, the job management unit 304 of the first print server 130 moves the print job 904 from the comprehensive logical printer 901 to the individual logical printer 902a. This allows the print job 904 to be printed by the physical printer 903a, since the print job 904 is associated with the individual logical printer 902a.

In step S914, the CP control unit 707 of the physical printer 903a transmits a print job request to the individual logical printer 902a (step S816 in FIG. 8). In step S915, in response to receiving the print job request from the physical printer 903a, the print control unit 302 of the first print server 130 transmits a print job response to the physical printer 903a (step S817 in FIG. 8). This print job response includes the print job 904. Thereafter, the print processing unit 704 of the physical printer 903a performs printing based on the print job 904.

In the above example, the user gave an instruction to move the print job 904 from the comprehensive logical printer 901 to the individual logical printer 902a, but the user may also give an instruction to move the print job 904 to individual logical printer 902b or 902c. In this case, printing is performed by the physical printer 903b or 903c. In this way, after the print job 904 is submitted to the first print server 130, the user can cause any of the physical printers 903a to 903c to perform printing. This printing method can also be called pull printing.

### Specific Example of Printer Information and Job Information of Print Server

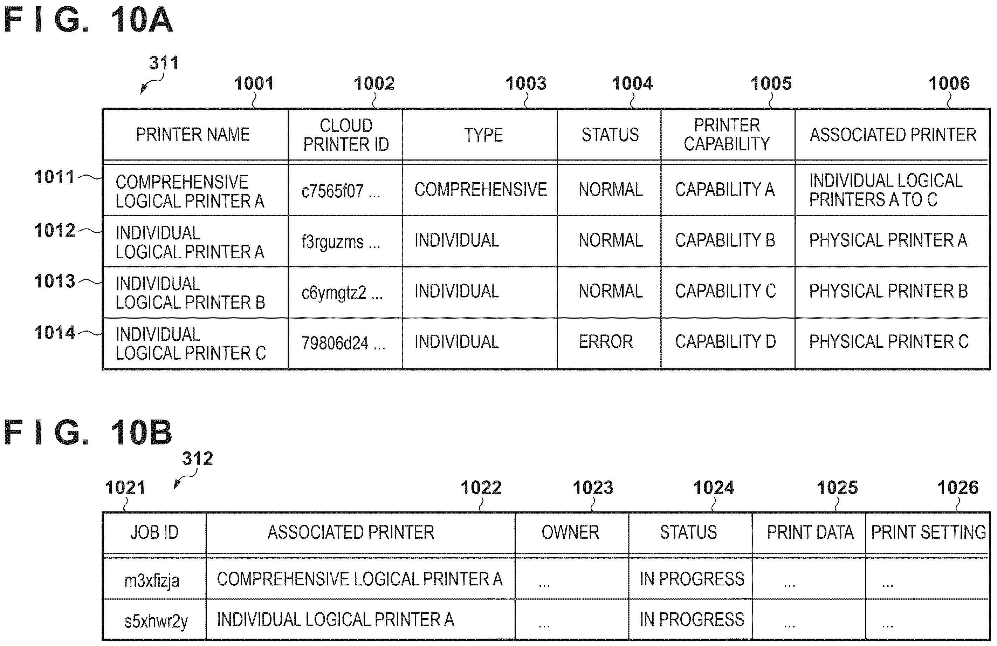

The following describes printer information and job information of the print server. Since the second print server 140 is similar to the first print server 130, a specific example of the printer information 311 managed by the printer management unit 303 of the first print server 130 will be described below with reference to FIG. 10A. In this example, the printer information 311 is stored in a table format. Each record in the printer information 311 represents a logical printer. The logical printer may be a comprehensive logical printer or an individual logical printer. A record 1011 represents, for example, the comprehensive logical printer 901 in FIG. 9. Records 1012 to 1014 represent, for example, the individual logical printers 902a to 902c of FIG. 9, respectively. The printer information 311 may include, in addition to the information described below, information related to print queues, for example.

A column 1001 indicates the names of the logical printers. A column 1002 indicates cloud printer IDs that are uniquely assigned to the logical printers by the first print server 130. Since one individual logical printer is associated with one physical printer, the cloud printer ID of the individual logical printer also uniquely identifies the physical printer. A column 1003 indicates the types of the logical printers. The type of a logical printer may be either "comprehensive", which indicates that it is a comprehensive logical printer, or "individual", which indicates that it is an individual logical printer. A column 1004 indicates the status of the logical printer.

A column 1005 indicates printer capabilities of the logical printers. If the logical printer is an individual logical printer, the printer capability of the individual logical printer may be the printer capability of the physical printer associated with the individual logical printer. The printer capability may include, for example, having a color printing capability, having a sorting capability, and the like. The printer capability of a comprehensive logical printer may be the logical sum of the printer capabilities of one or more individual logical printers associated with the comprehensive logical printer. For example, if some of the individual logical printers associated with a comprehensive logical printer have a sorting function and the remaining individual logical printers associated with the comprehensive logical printer do not have a sorting function, the comprehensive logical printer may be managed as having a sorting function.

A column 1006 indicates printers associated with the logical printers. If the logical printer is a comprehensive logical printer, the printers associated with the logical printer are one or more individual logical printers associated with the comprehensive logical printer. If the logical printer is an individual logical printer, the printer associated with the logical printer is one physical printer associated with the individual logical printer.

A specific example of the job information 312 managed by the job management unit 304 of the first print server 130 will be described with reference to FIG. 10B. In the example of FIG. 10B, the job information 312 is stored in a table format. Each record in the job information 312 represents a print job that has been submitted to the first print server 130.

A column 1021 indicates the job ID uniquely assigned to the print job by the first print server 130. A column 1022 indicates the logical printer associated with the print job. When a print job is submitted to a specific logical printer, the print job is associated with this specific logical printer. As described above with reference to FIG. 9, the logical printer to which the print job is associated may be changed to another logical printer in response to an instruction from the user.

A column 1023 indicates the users who submitted the print jobs. A column 1024 indicates the statuses of the print jobs. A column 1025 indicates the print data to be printed in the print jobs. A column 1026 indicates the settings for printing the print jobs.

### Operation Flow of Registration Processing by Printing Apparatus

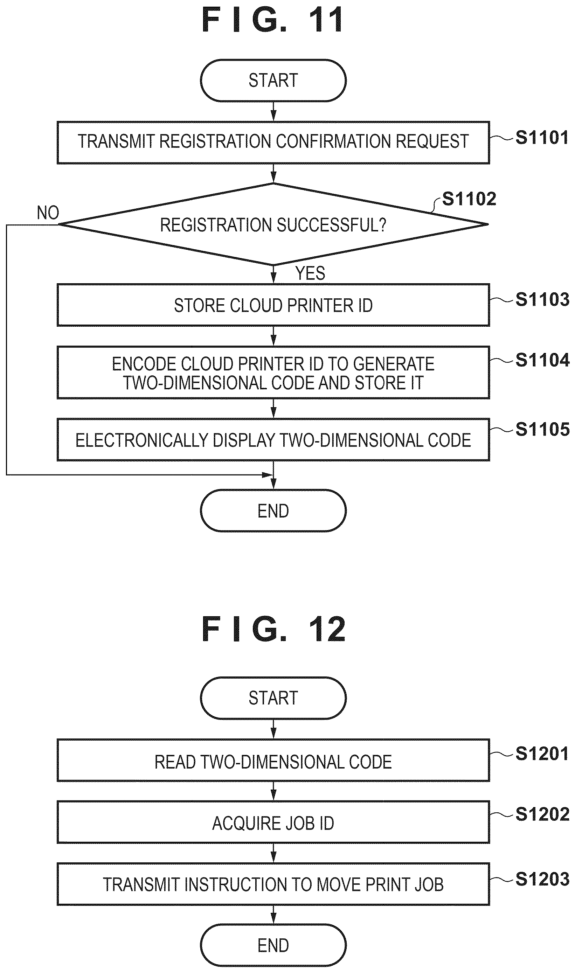

Processing for registering a printing apparatus in a print server will be described. Since the second print server 140 is similar to the first print server 130, the following describes details of an example of the operation of the printing apparatus 500 for registering the printing apparatus 500 in the first print server 130, with reference to FIG. 11. The following operations correspond to steps S807 to S808 in FIG. 8. In step S1101, the registration control unit 705 of the printing apparatus 500 transmits a registration confirmation request to the first print server 130 (step S807 in FIG. 8).

In step S1102, the registration control unit 705 of the printing apparatus 500 determines whether or not the registration of the printing apparatus 500 was successful. If the registration control unit 705 of the printing apparatus 500 determines that the registration of the printing apparatus 500 was successful ("YES" in step S1102), it transitions the processing to step S1103, and if not ("NO" in step S1102), it ends the processing. When the processing is ended, the information output unit 702 of the printing apparatus 500 may notify the user that the registration has failed. The registration control unit 705 of the printing apparatus 500 may also determine whether the registration was successful based on the content of the registration confirmation response received from the first print server 130.

In step S1103, the storage control unit 720 of the printing apparatus 500 stores the cloud printer ID included in the registration confirmation response. This cloud printer ID is identification information uniquely assigned to an individual logical printer associated with the printing apparatus 500. In step S1104, the two-dimensional code generation unit 708 of the printing apparatus 500 generates the two-dimensional code 722 by encoding the cloud printer ID included in the registration confirmation response. The storage control unit 720 of the printing apparatus 500 stores this two-dimensional code 722. In step S1105, the information output unit 702 of the printing apparatus 500 electronically displays the two-dimensional code 722 on the display panel 601.

### Operation Flow of Movement Instruction by Portable Communication Apparatus

An example of an operation in which the portable communication apparatus 150 transmits an instruction to move a print job from a comprehensive logical printer to an individual logical printer will be described in detail with reference to FIG. 12. The following operations correspond to step S912 in FIG. 9. Also, although the first print server 130 will be described, the same applies to the second print server 140 as well. An application for executing the following operation may be installed in the portable communication apparatus 150 in advance. It is assumed that the operation of FIG. 11 has been completed before the operation of FIG. 12 is started, and the two-dimensional code 722 is displayed on the display panel 601 of the printing apparatus 500.

In step S1201, the portable communication apparatus 150 reads the two-dimensional code 722 in response to the user pointing the camera 209 at the two-dimensional code 722 displayed on the printing apparatus 500. Thereafter, the portable communication apparatus 150 decodes the two-dimensional code 722 to acquire the cloud printer ID represented by the two-dimensional code 722.

In step S1202, the portable communication apparatus 150 acquires the job ID of the print job submitted by the user. The job ID may be manually input by the user or may be selected from a list of print jobs acquired from the first print server 130.

In step S1203, the portable communication apparatus 150 transmits, to the first print server 130, an instruction to associate the print job having the job ID acquired in step S1202 with the individual logical printer having the cloud printer ID acquired in step S1202.

As described above, according to this embodiment, the printing apparatus 500 electronically displays the two-dimensional code 722 representing the cloud printer ID of the individual logical printer. This reduces the effort required for the user to physically prepare the two-dimensional code.

### Processing for Movement Instruction by Printing Apparatus

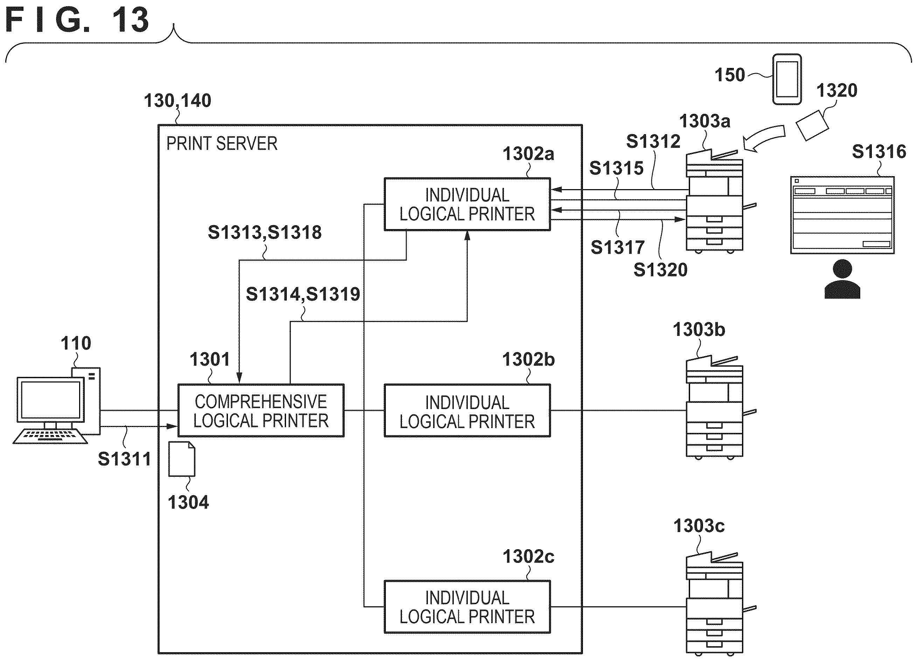

In FIGS. 9 and 12, the portable communication apparatus 150 is used to issue an instruction to move a print job from the comprehensive logical printer to an individual logical printer. The printing apparatus can also move a print job from a comprehensive logical printer to an individual logical printer. A method for performing pull printing (reservation printing) for a print job submitted from the printing apparatus 500 to the comprehensive logical printer of the print server will be described with reference to FIG. 13.

Since the second print server 140 is similar to the first print server 130, an example of an individual logical printer provided by the first print server 130 will be described below with reference to FIG. 13. Three individual logical printers 1302a to 1302c are registered in the first print server 130, and the first print server 130 provides these three individual logical printers. In addition, the three individual logical printers 1302a to 1302c are individually associated with three physical printers 1303a to 1303c, respectively. For example, the individual logical printer 1302a is associated with only the physical printer 1303a out of the three physical printers 1303a to 1303c. The physical printers 1303a to 1303c may each have a similar configuration to the printing apparatus 500. The physical printers 1303a to 1303c may be connected to the same LAN 101 as the information processing apparatus 110, like the printing apparatus 120, or may not be connected to the same LAN 101 as the information processing apparatus 110, like the printing apparatus 121.

A flow of printing processing performed by submitting a print job to a comprehensive logical printer 1301 will be described with reference to FIG. 13. In step S1311, the print control unit 404 of the information processing apparatus 110 submits a print job 1304 to the comprehensive logical printer 1301. At this stage, the user of the information processing apparatus 110 does not need to designate which physical printer to use for printing.

In step S1312, the user who submitted the print job 1304 requests the first print server 130 to transmit a list of print jobs submitted by the user, including the print job 1304, in order to perform printing using the physical printer 1303a. The request for the print job list includes the cloud printer ID of the individual logical printer 1302a that is the movement destination and user identification information that specifies the user. The user identification information may be any identification information that specifies the user. For example, the user identification information may be a user ID. The user identification information may be a user account for the cloud print service.

The user holds an IC card 1320 or the portable communication apparatus 150 owned by the user over a card reading portion (not shown) of the physical printer 1303a, thereby causing the physical printer 1303a to read the user identification information. The user may input a user ID and password on a login screen (not shown) displayed on the display panel 601 of the physical printer 1303a.

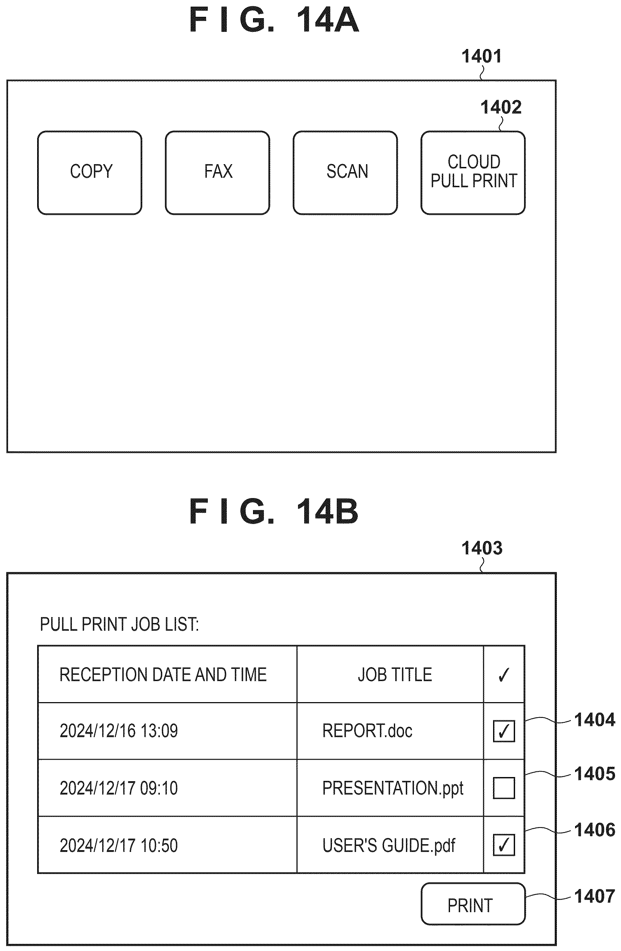

When the user logs in to the CPS from the physical printer 1303a, an operation screen 1401 shown in FIG. 14A is displayed on the display panel 601 of the physical printer 1303a. The user operates a cloud print button 1402 on the operation screen 1401.

The physical printer 1303a transmits the acquired user identification information and the cloud printer ID of the individual logical printer 1302a specifying itself to the first print server 130, and requests a list of print jobs submitted by the user (step S1312). At this time, the physical printer 1303a may request a list of print jobs from the first print server 130 using a get command.

When the first print server 130 receives a print job list request from the physical printer 1303a in step S1312, the job management unit 304 of the first print server 130 acquires the print job list in step S1313. In step S1313, the job management unit 304 acquires a list of print jobs that the user has submitted to the comprehensive logical printer 1301 based on the user identification information included in the print job list request. In step S1314, the job management unit 304 of the first print server 130 transmits a list of print jobs that the user has submitted to the comprehensive logical printer 1301 to the individual logical printer 1302a.

In step S1315, the physical printer 1303a receives the list of print jobs. Then, in step S1316, the operation unit I/F 507 of the physical printer 1303a displays a list 1403 of the print jobs submitted by the user on the display panel 601. FIG. 14B shows an example of the list 1403 of the print jobs. The list 1403 of the print jobs displays report.doc 1404, presentation.ppt 1405, and user's guide.pdf 1406. The user selects a print job to be printed from the print job list 1403 and instructs execution of the print job. In the example of FIG. 14B, the user selects two print jobs, namely report.doc 1404 and user's guide.pdf 1406, by marking their checkboxes, and operates a print button 1407 to instruct the execution of print jobs 1404 and 1406. Execution of a print job may also be requested by a fetch command.

In step S1317, the CP control unit 707 of the physical printer 1303a transmits a print job request to the first print server 130. In response to receiving the print job request from the physical printer 1303a in step S1318, the print control unit 302 of the first print server 130 transmits a print job response to the physical printer 1303a in step S1319. Specifically, the print control unit 302 of the first print server 130 moves a print job 1304 instructed by the user among print jobs that have been submitted to and reserved by the comprehensive logical printer 1301, from the comprehensive logical printer 1301 to the individual logical printer 1302a. In step S1320, the print processing unit 704 of the physical printer 1303a that received the print job 1304 executes the print job 1304.

In the above example, the user selects a print job to be executed from a list of print jobs, but all print jobs owned by the user may be executed.

Also, in the above example, the user issued an instruction to move the print job from the comprehensive logical printer 1301 to the individual logical printer 1302a. The user may also issue an instruction to move the user's print job from the comprehensive logical printer 1301 to the individual logical printer 1302b or 1302c. In this case, printing is performed by the physical printer 1303b or 1303c.

### Coordination of Cloud Print Services

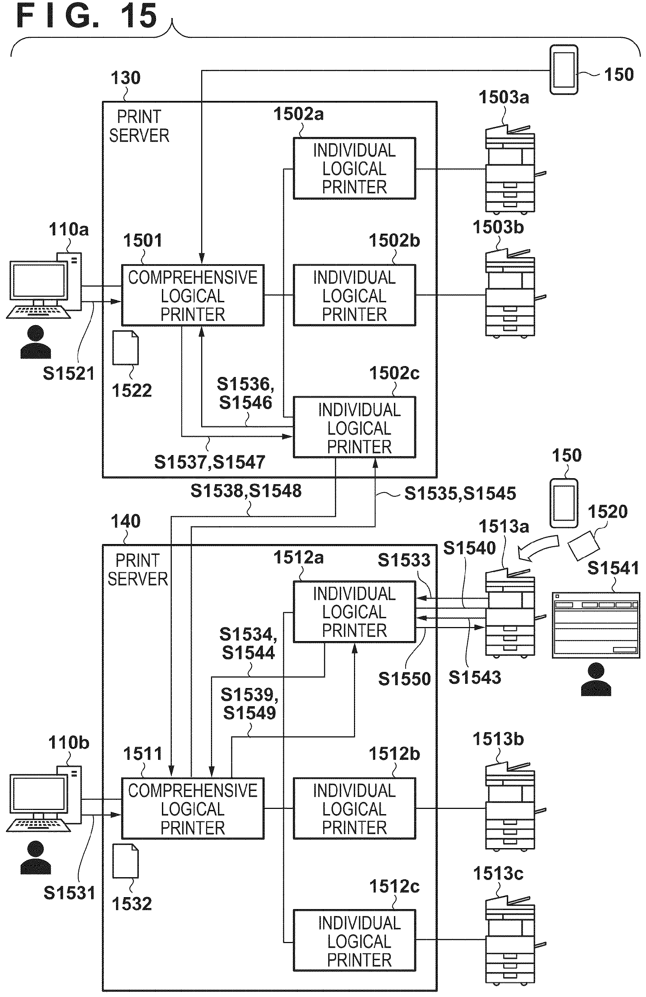

With reference to FIG. 15, pull printing in a cloud print system configured such that a plurality of CPSs operate in coordination with each other will be described. A cloud print system in which the first print server 130 that provides a CPS and the second print server 140 that provides a CPS are in coordination with each other will be described.

The first print server 130 and the second print server 140 may use different CPS authentication methods. The CPS provided by the first print server 130 may be an authentication method that collectively manages cloud services. On the other hand, the CPS provided by the second print server 140 may support on-premises authentication within a company. The CPS authentication method is not limited to these, and other methods may be used. In addition, the first print server 130 and the second print server 140 may provide the same type of CPS.

The first print server 130, the second print server 140, and the information processing apparatus 110 and physical printer connected to each print server are the same as those described with reference to FIG. 9 or FIG. 13. The first print server 130 and the second print server 140 operate in coordination with each other.

The first print server 130 includes a comprehensive logical printer 1501 and individual logical printers 1502a to 1502c. The comprehensive logical printer 1501 is associated with the individual logical printers 1502a to 1502c. The second print server 140 includes a comprehensive logical printer 1511 and individual logical printers 1512a to 1512c. The comprehensive logical printer 1511 is associated with the individual logical printers 1512a to 1512c.

When the second print server 140 is coordinated with the first print server 130, the comprehensive logical printer of the second print server 140 is associated with an individual logical printer registered in the first print server 130 (in this case, the individual logical printer 1502c). That is, in FIG. 15, the individual logical printer 1502c is associated with the comprehensive logical printer 1511 of the second print server 140 that provides the CPS, instead of with a physical printer.

Conventionally, in the configuration of FIG. 15, pull printing could not be executed by the physical printers 1513a to 1513c for a print job submitted to the first print server. This is because the print job submitted to the first print server 130 could not be acquired by the second print server 140. In this embodiment, a new printer attribute is defined, making it possible to acquire a print job submitted from the second print server 140 to the first print server 130.

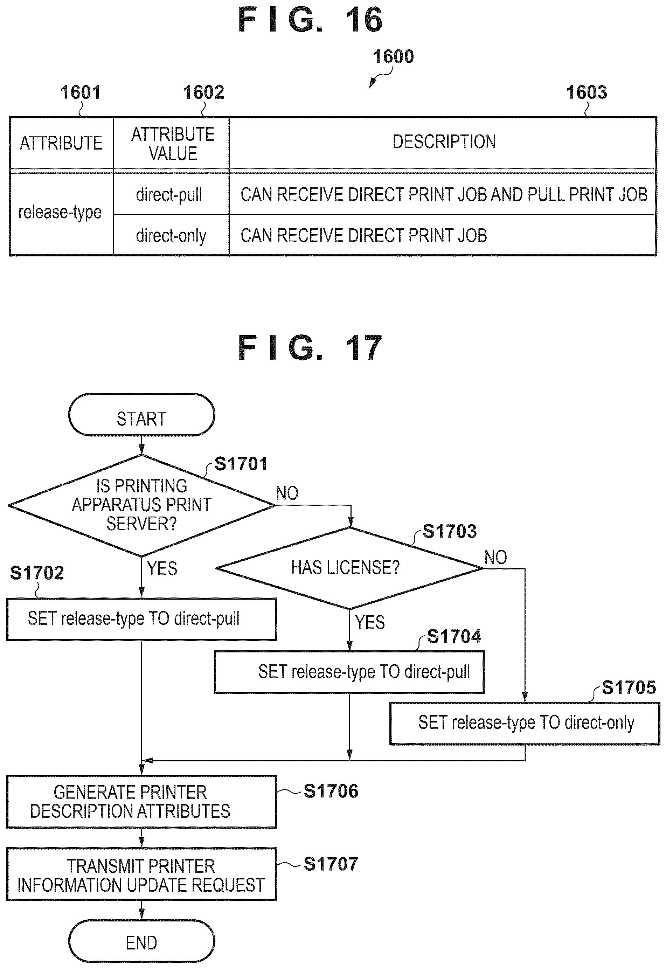

The printer attribute information when registering a printing apparatus in a print server will be described with reference to FIG. 16. FIG. 16 shows a printer description attribute 1600 defined in this embodiment. The printer description attribute 1600 in FIG. 16 shows an example of the Internet Printing Protocol (IPP), but other protocols may also be used. A "release-type" is newly provided as a printer attribute 1601 in the printer description attribute 1600. The release-type attribute belongs to the printer-description attribute group. The release-type attribute can take two values, namely direct-pull and direct-only, as attribute values 1602. A printing apparatus having direct-pull as an attribute value can receive print jobs for both direct printing and pull printing. On the other hand, a printing apparatus having direct-only as an attribute value can receive a print job for direct printing, but cannot execute pull printing from the printing apparatus. Direct printing is a method in which the information processing apparatus 110 designates the printing apparatus and executes printing. A print job for direct printing is not held on the print server, but is subjected to printing directly by a physical printer. The release-type attribute determines the direct-pull attribute or the direct-only attribute depending on whether the printing apparatus has a license for the pull printing service.

In addition, it is a prerequisite that a printing apparatus whose release-type attribute is direct-pull can receive a print job for pull printing, or in other words, it is a prerequisite that the printing apparatus can acquire information of a print job before acquiring the print job. In this embodiment, the release-type attribute can be set not only for a physical printer but also for a print server that provides a CPS. A print server that provides a CPS can register another print server that also provides a CPS as a printing apparatus having direct-pull as a release-type attribute.

As shown in FIG. 8, the printing apparatus 120 transmits a CPS printer information update request S809 to the print servers 130 and 140. The printer information update request S809 includes the printer attribute information of the printing apparatus 120. The printer description attribute 1600 in FIG. 16 illustrates the printer attribute information transmitted in step S809.

A method for registering the printer attributes of the printing apparatus 120 in the print servers 130 and 140 by issuing a printer information update request (step S809) will be described with reference to FIG. 17. Many vendors offer pull printing services using a licensing scheme. For this reason, in this embodiment, if the pull printing service is not included, the printer attribute is set such that the pull printing service is not provided. In addition, when linking a CPS with another CPS, the CPS is registered as providing a pull printing service.

The flow of FIG. 17 may be realized by the CPU 501 executing a program read out from the storage apparatus 504 of the printing apparatus 120 to the RAM 502. The flow in FIG. 17 is processing corresponding to the cloud printer information update request S809 in FIG. 8. The information update request S809 includes the printer attribute of the printing apparatus 120.

First, a case will be described in which the physical printer 1503b is registered in the first print server 130. In step S1701, the registration control unit 705 of the printing apparatus 120 determines whether the printing apparatus is a CPS print server or a physical printer. If the printing apparatus is the physical printer 1503b, the registration control unit 705 determines NO since it is not a print server, and the processing proceeds to step S1703.

In step S1703, the registration control unit 705 determines whether the physical printer 1503b has a pull printing license. The registration control unit 705 may determine the pull printing license based on whether or not a license key is set in the storage apparatus 504 of the physical printer 1503b. The license may also be set in a license module. The registration control unit 705 may also query a license server that manages licenses for the printing apparatus to confirm the license. In addition, the registration control unit 705 may query the first print server 130 or the second print server 140 that provides the CPS, and if either of them has a pull printing license, the registration control unit 705 may determine that there is a pull printing license.

In step S1703, if the registration control unit 705 determines that there is a pull printing license, the processing proceeds to step S1704, and if it determines that there is no pull printing license, the processing proceeds to step S1705. In step S1704, the registration control unit 705 sets the release-type attribute to direct-pull, and the processing proceeds to step S1706. Also, in step S1705, the registration control unit 705 sets the release-type attribute to direct-only, and the processing proceeds to step S1706.

Next, processing for registering a print server that provides a CPS as a printing apparatus when linking another CPS to the CPS will be described. When the second print server 140 is registered in the first print server 130, the comprehensive logical printer 1511 of the second print server 140 is registered in the first print server 130. The comprehensive logical printer 1511 of the second print server 140 is associated with an individual logical printer in the first print server 130.

In step S1701, the registration control unit 301 of the second print server 140 determines that the printing apparatus is a print server, and the processing proceeds to step S1702. In step S1702, the registration control unit 301 sets the release-type attribute to direct-pull, and the processing proceeds to step S1706.

Steps S1706 and S1707 are processes that are both performed when registering a physical printer and a print server that provides a CPS. In the case of a print server, the processing is the same as that of a physical printer except that it is performed by the registration control unit 301, and therefore the processing performed by the registration control unit 705 of the physical printer will be described.

In step S1706, the registration control unit 705 generates printer description attributes. Printer description attributes include the printer name, manufacturer, model name, and the like, as well as the release-type.

After step S1706, in step S1707, the registration control unit 705 transmits the printer attributes including the printer description attributes to the first print server 130. The processing of step S1707 corresponds to the processing of step S809 in FIG. 8.

The above is processing for registering the printing apparatus 120 or the second print server 140 in the first print server 130.

According to this embodiment, the comprehensive logical printer 1511 of the second print server 140 is registered in the first print server 130 with the direct-pull attribute. For this reason, it becomes possible to acquire a list of print jobs submitted to the first print server 130 from the printing apparatuses 1513a to 1513c registered in the second print server 140 and to perform pull printing. In addition, pull printing will no longer be possible from a physical printer that does not have a license for the pull printing service.

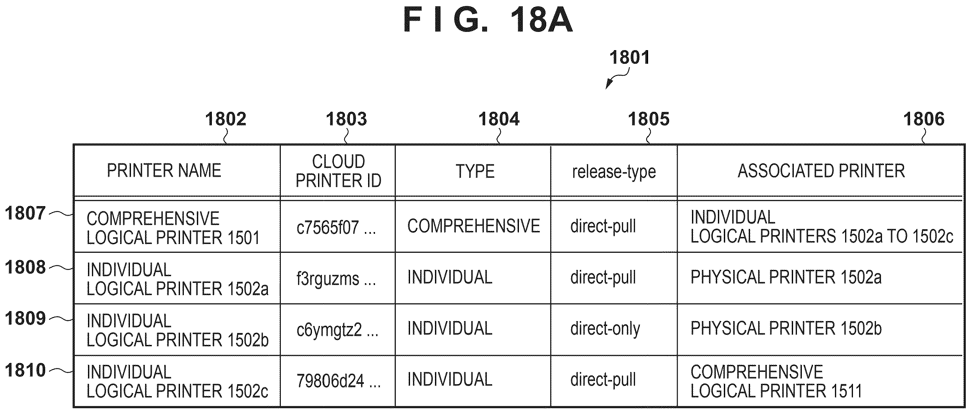

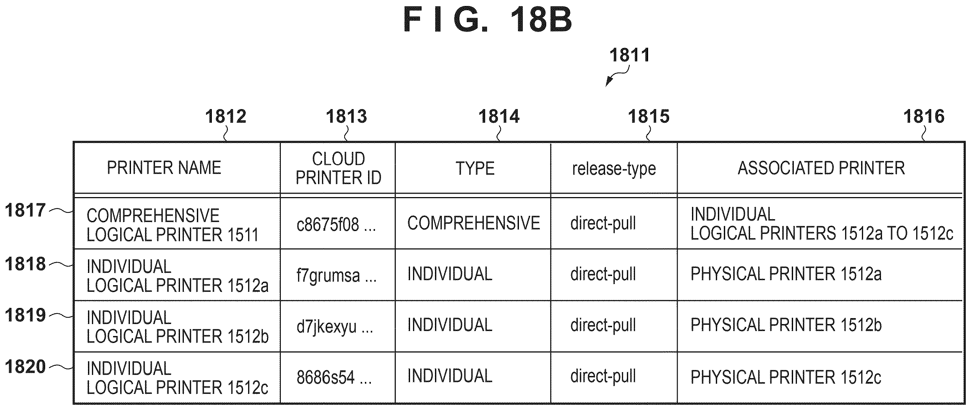

Printer information managed by the printer management unit 303 of the print servers 130 and 140 in the configuration of FIG. 15 will be described with reference to FIGS. 18A and 18B. Printer information 1801 shown in FIG. 18A is printer information managed by the printer management unit 303 of the first print server 130. Printer information 1811 shown in FIG. 18B is printer information managed by the printer management unit 303 of the second print server 140. The differences from FIG. 10A will be described, and description of redundant parts will be omitted. The printer information 1801 and 1811 may include information about the status of the logical printer (not shown), the printer capability of each logical printer, and the print queue, and the like.

A column 1805 is release-type information. The printer management unit 303 may manage the release-type information as the printer capabilities of the individual printers in the column 1005 of FIG. 5. For a printing apparatus that has a CPS pull printing license, the release-type attribute is set to direct-pull. On the other hand, for a printing apparatus that does not have a CPS pull printing license, the release-type attribute is set to direct-only. A printing apparatus whose release-type attribute is direct-pull is capable of both pull printing and direct printing. On the other hand, a printing apparatus whose release-type attribute is direct-only can perform direct printing, but cannot perform pull printing. The release-type attribute of the individual logical printer 1502a is registered as direct-pull, and the release-type attribute of the individual logical printer 1502b is registered as direct-only.

In addition, the individual logical printer 1502c is associated with the comprehensive logical printer 1511 of the second print server 140, and the release-type attribute is set to direct-pull. This makes it possible to acquire a list of print jobs submitted to the first print server 130 from a print server that provides a CPS different from that of the first print server 130, and to perform pull printing.

The comprehensive logical printer 1511 and the individual logical printers 1512a to 1512c are registered in the printer information 1811 managed by the printer management unit 303 of the second print server 140. The individual logical printers 1512a to 1512c are associated with the comprehensive logical printer 1511, and the release-type attribute of each is registered as direct-pull.

In the configuration of FIG. 15, in order to acquire a list of print jobs submitted from the second print server 140 to the first print server 130 and to acquire print jobs, it is necessary to make the user accounts of both servers correspond to each other. The CPS provided by the first print server 130 and the CPS provided by the second print server 140 do not necessarily need to have the same user account, and may have different user account names. For this reason, the user management unit 305 of the second print server 140 manages user account correspondence information as the user information 313 of the storage control unit 310. The user account correspondence information is information that indicates the correspondence between the user account (user identification information) of the first print server 130 and the user account (user identification information) of the second print server 140. The user account correspondence information may be managed by the first print server 130 or by both the first print server 130 and the second print server 140.

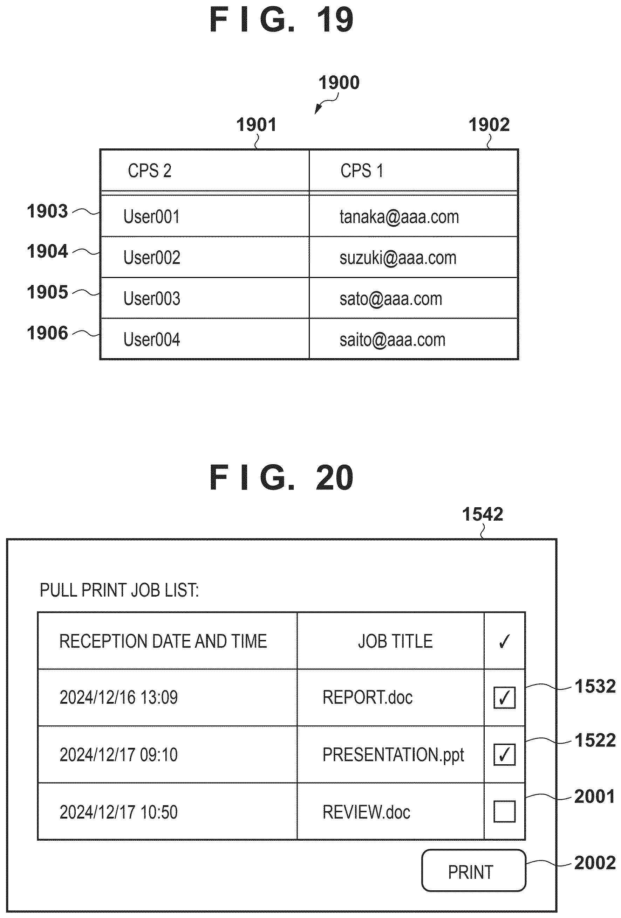

FIG. 19 shows an example of user account correspondence information 1900. In the example shown in this drawing, the user account correspondence information 1900 is stored in a table format. A column 1901 indicates the user accounts in the CPS provided by the second print server 140. A column 1902 indicates the user accounts in the CPS provided by the first print server 130. Each record of the user account correspondence information 1900 indicates the correspondence between the user account of a CPS 2 provided by the second print server 140 and the user account of a CPS 1 provided by the first print server 130 for each user account. For example, the user account of User001 in CPS 2 is associated in CPS 1 with the user account of CPS 2 called tanaka@aaa.com.

### Printing Processing Performed in Cooperation with Cloud Print Service

Next, returning to the description of FIG. 15, processing for performing pull printing of print jobs submitted from the information processing terminals 110a and 110b by the physical printers 1513a to 1513c will be described. Here, as an example, a case will be described in which pull printing is performed for a print job by the physical printer 1513a.

The information processing terminal 110a is connected to the first print server 130. The information processing terminal 110b is connected to the second print server 140. The information processing terminal 110a and the information processing terminal 110b may be the same terminal. That is, one information processing terminal 110 may be connected to the first print server 130 and the second print server 140.

First, the user registers a print job 1522 in the comprehensive logical printer 1501 from the information processing terminal 110a (step S1521). The user may also register a print job 1532 in the comprehensive logical printer 1511 from the information processing terminal 110b (step S1531).

The user who submitted the print jobs 1522 and 1532 requests the second print server 140 to transmit a list of the print jobs submitted by the user in order to execute pull printing by the physical printer 1513a.

First, the user holds the IC card 1520 or the portable communication apparatus 150 owned by the user over a card reading portion (not shown) of the physical printer 1513a, thereby causing the physical printer 1513a to read the user identification information. The user may input a user ID and password on a login screen (not shown) displayed on the display panel 601 of the physical printer 1513a. This allows the user to log in to the CPS.

When the user logs in to the CPS from the physical printer 1513a, the operation screen 1401 shown in FIG. 14A is displayed on the display panel 601 of the physical printer 1513a. The user operates the cloud print button 1402 on the operation screen 1401.

The physical printer 1513a transmits the acquired user identification information and the cloud printer ID of the individual logical printer 1512a specifying the individual logical printer 1512a to the second print server 140, and requests a list of print jobs submitted by the user (step S1533). At this time, the physical printer 1513a may request a list of print jobs using a get command from the second print server 140.

When the second print server 140 receives request for a list of print jobs from the physical printer 1513a in step S1533, the job management unit 304 of the second print server 140 acquires the list of print jobs in step S1534. In step S1534, the job management unit 304 acquires the list of print jobs that the user submitted to the comprehensive logical printer 1511 based on the user identification information included in the request for the list of print jobs. Also, in step S1535, the job management unit 304 of the second print server 140 queries the first print server 130 associated with the comprehensive logical printer 1511 for the print jobs submitted by the user. At this time, the job management unit 304 of the second print server 140 converts the user account of the logged-in user into the user account for the CPS provided by the first print server 130 based on the user account correspondence information 1900 and performs querying.

In response to the query for the print job in step S1535, the job management unit 304 of the first print server 130 acquires a list of print jobs that the user submitted to the comprehensive logical printer 1501 in steps S1536 and S1537. In step S1538, the job management unit 304 of the first print server 130 passes, to the second print server 140, a list of the user's print jobs that were submitted to the comprehensive logical printer 1501 of the first print server 130.

In step S1539, the job management unit 304 of the second print server 140 transmits a list of print jobs that the user has submitted to the first print server 130 and the second print server 140 to the individual logical printer 1512a. In step S1540, the physical printer 1513a receives the list of print jobs submitted by the user.

In step S1541, the operation unit I/F 507 of the physical printer 1513a displays, on the display panel 601, a list 1542 of print jobs submitted by the user. FIG. 20 shows an example of a list 1542 of print jobs. In the list 1542 of print jobs, report.doc 1532, presentation.ppt 1522, and review.doc 2001 are displayed. Report.doc is the print job 1532 submitted to the second print server 140. Presentation.ppt is the print job 1522 submitted to the first print server 130. In this way, the list 1542 of print jobs submitted by the user displays print jobs submitted to the comprehensive logical printer 1501 of the first print server 130 and the comprehensive logical printer 1511 of the second print server 140 without distinction. The user selects a print job to be printed from the print job list 1542 and operates the print button 2002 to instruct execution of the print job. In response to the instruction to execute the print job, the CP control unit 707 of the physical printer 1513a requests the second print server 140 to acquire the print job using a fetch command.

In the example of FIG. 20, the user selects two print jobs, namely report.doc 1532 and presentation.ppt 1522, by marking their checkboxes and operating the print button 2002 to instruct the execution of the print jobs 1532 and 1522.

In step S1543, the CP control unit 707 of the physical printer 1513a transmits a print job request to the second print server 140. The print control unit 302 of the second print server 140 that has received the print job request makes a print job request to the first print server 130 in step S1545 for the print job of the first print server 130. In steps S1546 and S1547, the print control unit 302 of the first print server 130 moves the print job 1522 submitted to the comprehensive logical printer 1501 to the individual logical printer 1502c.

In step S1548, the print control unit 302 of the first print server 130 transmits the print job 1522 requested by the second print server 140 to the second print server 140. In step S1549, the print control unit 302 of the second print server 140 moves the print jobs 1522 and 1532 from the comprehensive logical printer 1511 to the individual logical printer 1512a in response to the print job request from the physical printer 1513a.

In step S1550, the print processing unit 704 of the physical printer 1513a receives the print job 1522 and the print job 1532 and executes printing based on the print jobs.

In the above example, the user selected a print job to be executed from a list of print jobs, but all print jobs owned by the user may also be executed.

In the above example, the user instructed the physical printer 1513a to execute a print job. The user may also instruct the physical printer 1513b or 1513c to execute a print job. In this case, the print job moves from the comprehensive logical printer 1511 to the individual logical printer 1512b or 1513c. Execution of a print job using pull printing is possible on a physical printer whose release-type attribute is direct-pull.

In addition, it goes without saying that the print job 1522 submitted to the comprehensive logical printer 1501 of the first print server 130 can be subjected to pull printing by the physical printer 1503a. The print job 1532 submitted to the comprehensive logical printer 1511 of the second print server 140 cannot be executed by the physical printer 1503a. In addition, since the release-type attribute of the physical printer 1503b is direct-only, the print job 1522 cannot be executed by pull printing by the physical printer 1503b. In order to execute printing on the physical printer 1503b, when submitting the print job 1522 on the information processing terminal 110a, the physical printer 1503b is designated and direct printing is executed.

According to this embodiment, a print job submitted by a user to a CPS can be printed by pull printing by a printing apparatus associated with the linked CPS. In addition, print jobs submitted to the CPS can be managed centrally by the linked CPS. In addition, it is possible to use a CPS that can be accessed not only from within a company, but also from outside the company. In addition, pull printing is possible with a printing apparatus that has a license for the pull printing service.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. A print server (130) that provides a cloud print service, the print server comprising:
management means (303) configured to manage a comprehensive logical printer (1501);
registration means (301) configured to register a second print server (140) that provides a second cloud print service as a pull-print-capable printing apparatus in association with the comprehensive logical printer, and register a physical printer (1503a, 1503b) having a license for a pull printing service as a pull-print-capable printing apparatus in association with the comprehensive logical printer;
storage means (304) configured to store a print job submitted to the comprehensive logical printer in association with the comprehensive logical printer; and
transmission means (302) configured to receive an instruction to execute the print job from a printing apparatus associated with the comprehensive logical printer, and if the printing apparatus that issued the instruction is a pull-print-capable printing apparatus, to transmit the print job stored in association with the comprehensive logical printer to the printing apparatus that issued the instruction.

2. The print server according to claim 1, wherein the transmission means is configured to receive the instruction to execute the print job from a printing apparatus associated with the second print server via the second print server, determine that the second print server is a pull-print-capable printing apparatus, and transmit the print job stored in association with the comprehensive logical printer to the second print server.

3. The print server according to claim 1 or 2, wherein the registration means is configured to register a physical printer that does not have a license for a pull printing service as a printing apparatus that is not pull-print-capable.

4. The print server according to any one of claims 1 to 3, wherein the transmission means is further configured to receive a request for a list of print jobs of a user who submitted a print job, from a printing apparatus associated with the comprehensive logical printer; and if the printing apparatus that issued the request is a pull-print-capable printing apparatus, transmit a list of print jobs of the user that is stored in association with the comprehensive logical printer to the printing apparatus that issued the request.

5. The print server according to claim 4, wherein the transmission means is further configured to receive an execution instruction to execute one or more print jobs from a list of print jobs of a user and transmit the one or more print jobs for which the execution instruction was issued, to a printing apparatus that issued the execution instruction.

6. A control method for a print server (130) that provides a cloud print service and manages a logical printer, the method comprising:
registering a second print server (140) that provides a second cloud print service as a pull-print-capable printing apparatus in association with a comprehensive logical printer, and registering a physical printer having a license for a pull printing service as a pull-print-capable printing apparatus in association with the comprehensive logical printer (S807, S808);
storing a print job submitted to the comprehensive logical printer in association with the comprehensive logical printer; (S1521) and
receiving an instruction to execute the print job from a printing apparatus associated with the comprehensive logical printer (S1543), and if the printing apparatus that issued the instruction is a pull-print-capable printing apparatus, transmitting the print job stored in association with the comprehensive logical printer to the printing apparatus that issued the instruction (S1548).

7. A non-transitory computer-readable storage medium storing a program that, when executed by a computer of a print server (130) that provides a cloud print service, causes the print server to perform a control method, the method comprising:
managing a comprehensive logical printer;
registering a second print server (140) that provides a second cloud print service as a pull-print-capable printing apparatus in association with a comprehensive logical printer, and registering a physical printer having a license for a pull printing service as a pull-print-capable printing apparatus in association with the comprehensive logical printer (S807, S808);
storing a print job submitted to the comprehensive logical printer in association with the comprehensive logical printer; (S1521) and
receiving an instruction to execute the print job from a printing apparatus associated with the comprehensive logical printer (S1543), and if the printing apparatus that issued the instruction is a pull-print-capable printing apparatus, transmitting the print job stored in association with the comprehensive logical printer to the printing apparatus that issued the instruction (S1548).
